(19) Europäisches Patentamt
European Patent Office
Office européen des brevets

(11) **EP 0 744 267 B1**

(12) **EUROPÄISCHE PATENTSCHRIFT**

(45) Veröffentlichungstag und Bekanntmachung des Hinweises auf die Patenterteilung:
**11.07.2001   Patentblatt 2001/28**

(51) Int Cl.$^7$: **B29C 45/77**

(21) Anmeldenummer: **96108061.1**

(22) Anmeldetag: **21.05.1996**

(54) **Verfahren zur Prozessüberwachung und/oder Regelung einer Druckgiessmaschine**

Method for monitoring and/or controlling an injection moulding machine

Procédé pour contrôler et/ou régler le fonctionnement d'une presse d'injection

(84) Benannte Vertragsstaaten:
**CH DE ES FR IT LI**

(30) Priorität: **24.05.1995  DE 19519002**

(43) Veröffentlichungstag der Anmeldung:
**27.11.1996   Patentblatt 1996/48**

(73) Patentinhaber: **Müller Weingarten AG**
**D-88250 Weingarten (DE)**

(72) Erfinder:
• **Stummer, Friedrich, Dr. Ing.**
**70736 Fellbach (DE)**
• **Frey, Rolf**
**73650 Winterbach (DE)**

(74) Vertreter: **Patentanwälte**
**Eisele, Otten, Roth & Dobler**
**Karlstrasse 8**
**88212 Ravensburg (DE)**

(56) Entgegenhaltungen:
**EP-A- 0 128 722        EP-A- 0 361 837**
**EP-A- 0 531 532        EP-A- 0 644 030**
**DE-A- 3 021 978**

• **PATENT ABSTRACTS OF JAPAN vol. 013, no. 183 (M-820), 28.April 1989 & JP 01 014015 A (SUMITOMO HEAVY IND LTD), 18.Januar 1989,**
• **PATENT ABSTRACTS OF JAPAN vol. 009, no. 087 (M-372), 17.April 1985 & JP 59 214629 A (NITSUSEI JIYUSHI KOGYO KK), 4.Dezember 1984,**
• **PATENT ABSTRACTS OF JAPAN vol. 014, no. 231 (M-0974), 16.Mai 1990 & JP 02 059316 A (UBE IND LTD), 28.Februar 1990,**
• **PATENT ABSTRACTS OF JAPAN vol. 011, no. 199 (M-602), 26.Juni 1987 & JP 62 023722 A (SUMITOMO HEAVY IND LTD), 31.Januar 1987,**
• **PATENT ABSTRACTS OF JAPAN vol. 009, no. 275 (M-426), 2.November 1985 & JP 60 120026 A (MITSUBISHI JUKOGYO KK), 27.Juni 1985,**
• **PATENT ABSTRACTS OF JAPAN vol. 009, no. 256 (M-421), 15.Oktober 1985 & JP 60 107315 A (KIMURA:KK), 12.Juni 1985,**
• **PATENT ABSTRACTS OF JAPAN vol. 018, no. 616 (M-1710), 24.November 1994 & JP 06 238729 A (FANUC LTD), 30.August 1994,**

**Beschreibung**

Die Erfindung betrifft mehrere Verfahren nach den Ansprüchen 1, 2 und 18 und Meßsystemen nach den Ansprüchen 16 und 17.

Stand der Technik

Aus der Literaturstelle Gießerei 68 (1981) Nr. 18, Seite 531 ff., ist eine automatische Gießprozeßüberwachung beim Druckgießen bekanntgeworden, die das prinzipielle Verfahren der Druckgießsteuerung bzw. -überwachung aufzeigt. Dabei gehen die bis dahin bekannten Gießprozeßüberwachungssysteme davon aus, daß während des laufenden Gießprozesses gemessene Ist-Werte der verschiedensten Parameter mit vorgegebenen Sollwerten verglichen und im gleichen oder nachfolgenden Gießzyklus gegebenenfalls Korrekturen zur Anpassung z. B. einer Ist-Wert-Kurve an eine Sollwert-Kurve durchgeführt werden.

Aus einem weiterhin bekannten Verfahren zu Überwachung des Einspritzvorgangs bei einer Kunststoff-Spritzgießmaschine gemäß der EP 0 128 722 B1 werden Parameterwerte beim Herstellungsprozeß als Referenzdaten zur Bildung einer Referenzkurve für solche hergestellten Produkte verwendet, die als Gußteile mit noch guter Qualität bewertet wurden. Bei der späteren Serienfertigung werden dann die gemessenen Ist-Daten mit den so ermittelten vorgegebenen Referenzdaten verglichen, wobei Toleranzgrenzen die noch zulässigen Abweichungen bestimmen.

Das Einfahren einer neuen Druckgießform ist demzufolge mit einer umfangreichen Experimentierphase verbunden, um brauchbare Einstell- und Referenzwerte für die spätere Serienfertigung zu erhalten. Dabei wird diese Experimentierphase durch manuelles Eingeben der verschiedensten Parameter vollzogen, d. h., der eigentlichen Serienfertigung wird eine Versuchsfertigung mit manuell eingegebenen Parametern vorgeschaltet.

Bezüglich der Maschinensteuerung einer Druckgießmaschine sowie den damit verbundenen Steuerkurven wird ergänzend auf die Literaturstelle Ernst Brunnhuber: Praxis der Druckgußfertigung 1980, Seite 82 ff. verwiesen. Insbesondere ist auf Seite 93 ff. die Meßtechnik des Gießantriebs erläutert, wonach eine Messung und Aufzeichnung des Gießkolbenwegs sowie des Gießkolbendrucks in Abhängigkeit der Zeit erfolgt. Eine Auswertung und Berechnung der Gießkolbengeschwindigkeit, aus dem in Abhängigkeit von der Zeit gemessenen Kolbenweg, kann in einem Meßrechner erfolgen und das Ergebnis wird in der Regel digital angezeigt. Die Druckmessung geschieht mittels eines Druckgebers am Antriebszylinder, der ebenfalls am Meßrechner angeschlossen ist. Damit werden Druck, Zeit und Gießkolbengeschwindigkeit erfaßt.

Verwiesen wird weiterhin auf die EP 361 837 B1 (Ube) bei welcher die Regelung des Gießverfahrens durch Vorgabe einer Weg-Zeit-Sollkurve des Gießkolbens erfolgt, wobei eine Regelung der tatsächlichen Hubbewegung des Preßstempels im Sinne eines Nachfahrens der Sollkurve erfolgt.

Aus der Literaturstelle Giesserei 79, 1992, Nr. 9, 27. April, S. 347-354, ist ein echtzeitgeregeltes Gießaggregat bekannt geworden. Eine Meßeinrichtung selbst wird nicht näher beschrieben. Auf Seite 349 dieser Literaturstelle ist eine Programmierung der Umschaltung auf Druckregelung bei einer "abfallenden Druckflanke" beschrieben. Dabei erfolgt die Umschaltung nach Erreichen eines Wegpunktes, nach Erreichen eines Druckes und nach Erreichen einer bestimmten Geschwindigkeit.

Auf Seite 350 dieser Literaturstelle wird in einer typischen Gießkurvendarstellung eine Relation zwischen Weg- und Geschwindigkeitspunkten dargestellt. Auf den Auswertungsvorgang in einem Meßgerät wird jedoch nicht Bezug genommen. Insbesondere ist in dieser Literaturstelle kein Hinweis enthalten, wie eine automatische Auswertung von Meßkurven in Relation zur Maschineneinstellung erfolgt.

Auch aus der Literaturstelle Giesserei 80, 1993, Nr. 8, 19. April, S. 247-252 ist kein Hinweis enthalten, wie eine automatische Auswertung von Meßkurven in Relation zur Maschineneinstellung im einzelnen erfolgen soll.

Zum Verständnis der Erfindung wird generell auf folgendes hingewiesen:

Bei der automatischen Auswertung von Meßkurven an Druckgießmaschinen unterscheidet man sogenannte ungeregelte und geregelte Druckgießmaschinen.

Die Einstellung von ungeregelten Druckgießmaschinen erfolgt beispielsweise durch Aufzeichnung und Überwachung verschiedener Parameter in einem Meßwert-Erfassungssystem, wobei diese mit statistischen Methoden ausgewertet werden. So können beispielsweise Funktion p (t), s (t) sowie v (t) als Meßdiagramm vorliegen und die für den Druckgußprozeß relevanten Parametern werden in digitaler Form angezeigt. Diese digitalen Werte werden aus einer druckgußspezifischen Kurve automatisch bestimmt. Hierdurch kann z. B. die Ermittlung des Umschaltpunktes zwischen der ersten und zweiten Druckgießphase bei der ersten sprungartigen Änderung des Wegsignals erfolgen. Weiterhin kann die Nachdruckphase sowie die Nachdruckverzögerung problemlos den Kurven entnommen werden. Die so digital vorliegenden Werte können vom Meßrechner weiterverarbeitet und durch statistische Methoden ausgewertet werden.

Bei geregelten Druckgießmaschinen besteht die Möglichkeit, die Einstellung des Gießaggregats über Profilkurven vorzunehmen. Dabei kann die Programmierung der Druckgießmaschine beispielsweise durch Eingabe einer Soll-profilkurve für die Geschwindigkeit erfolgen (f = v (s)). Zu charakteristischen Schaltpunkten bzw. Gießkolbenstellungen wird demnach die zugehörige Sollgeschwindigkeit eingegeben, wobei eine Rampenfunktion berücksichtigt werden kann. Diese Soll-Profilkurve kann über den gesamten Verlauf des Druckgießvorgangs, d. h., über die Vorlaufphase der Formfüllphase und der Nachdruckphase eingegeben werden. Eine in den Meßrechner eingegebene Soll-Profilkurve f = v (s) ist allerdings mit der im Meßrechner angezeigten Ist-Kurve f = v (t) nicht direkt vergleichbar. Es müssen demnach Anpassungsmaßnahmen getroffen werden.

## Aufgabe der Erfindung

Der Erfindung liegt die Aufgabe zugrunde, ein Verfahren vorzuschlagen, mittels welcher die Soll-Profilkurven für die Einstellung der Druckgießmaschine im Meßrechner automatisch mit der Ist-Kurve verglichen werden kann. Insbesondere ist es auch Aufgabe der Erfindung, eine Zeitabstimmung zwischen Soll-Profilkurven und Ist-Profilkurven im Meßrechner vorzunehmen und zwar unabhängig von einer Triggerung (Start) der Meßwertaufnahme. Beim Vergleich der Soll- und Ist-Profilkurven sollen Toleranzgrenzen berücksichtigt werden. Durch Vorgabe einer Masterkurve im Meßrechner sollen mittels eines einfachen Verfahrens beliebige Punkte ausgewählt werden können, die zur Auswertung zur Verfügung stehen, wobei auch beliebige Zwischenwerte mit einbezogen werden können.

Diese Aufgabe wird durch die Merkmale der Ansprüche 1, 2, 16, 17 und 18 gelöst. In den weiteren Ansprüchen sind vorteilhafte und zweckmäßige Weiterbildungen und Ergänzungen der Erfindung angegeben.

## Vorteile der Erfindung

Bei der vorliegenden Erfindung findet demzufolge ein automatischer Vergleich der Einstellparameter eines Gießaggregats mit den gemessenen Gießparametern statt. Dabei liegt die Besonderheit der Meßreinrichtung darin, daß alle Einstelldaten (Soll-Werte) des Gießaggregats in Meßrechnern derart generiert werden, daß nach Aufzeichnung von Ist-Kurven ein sofortiger automatischer Vergleich mit den Einstelldaten bzw. den Einstellkurven erfolgen kann.

Eine Besonderheit liegt darin, daß die Einstelldaten der Druckgießmaschine aus einer tabellarischen Eingabe bestehen, aus der eine Geschwindigkeits-Profilkurve abgeleitet werden kann und die einzelnen Geschwindigkeitspunkte entsprechenden Gießkolbenstellungen zugeordnet sind. Das Meßsystem zeichnet dann die Geschwindigkeit-Kurve als v/t-Kurve auf, wobei die Ermittlung der Ist-Geschwindigkeit vom Meßsystem in der Weise durchgeführt wird, daß auf die einzelnen relevanten eingegebenen Punkte auf der s/t-Kurve senkrechte Strahlen gelegt werden und daß am Schnittpunkt mit der v/t-Kurve die Ist-Geschwindigkeitswerte automatisch ermittelt werden können.

In alternativer Ausführungsform können die Einstelldaten der Druckgießmaschine aus einer tabellarischen Eingabe bestehen, aus der eine Druckprofilkurve abgeleitet werden kann. Dabei sind die einzelnen Druckpunkte entsprechenden Zeitwerten nach "Gießkolbenstop" am Ende der Formfüllung zugeordnet.

Daß Meßsystem zeichnet die Druckkurve als p/t-Kurve auf, wobei insbesondere der Meßpunkt "Gießkolbenstop" durch die abfallende Druckflanke an der Kolbenstangenseite des Gießzylinders gebildet wird. Ausgehend von diesem Signal wird vom Meßsystem ein senkrechter Strahl T0 generiert. Auf den Zeitabschnitten (T0 + X), die bei Eingabe der Druckprofiltabelle festgelegt worden sind, werden im Meßsystem weitere senkrechte Strahlen generiert. Die Schnittpunkte mit der Ist-Druckkurve werden mit den tabellarischen Einstellwerten der Maschineneinstellung verglichen und ausgewertet.

Eine weitere Besonderheit der Erfindung liegt darin, daß bei der Eingabe der Maschineneinstelldaten durch den Bediener gleichzeitig obere und untere Toleranzgrenzen mit eingegeben werden können. Dem Meßsystem liegen dann die Besonderheiten zugrunde, daß die Toleranzgrenzen auf den Strahlen wie oben beschrieben in dem Meßaufschrieb automatisch mit angezeigt werden und die Abweichung zum Soll-Wert digital als Zahlenwert dargestellt werden können.

Weitere Einzelheiten und Vorteile der Erfindung sind in der nachfolgenden Beschreibung von Ausführungsbeispielen unter Zuhilfenahme von Zeichnungen näher erläutert. Dabei enthalten die Zeichnungen sowohl Datendiagramme als auch graphische Kurvendarstellungen.

## Beschreibung von Ausführungsbeispielen der Erfindung

An einer geregelten Druckgießmaschine können beispielsweise folgende Profilkurven gefahren werden:

-    Geschwindigkeitsprofilkurve
-    Druckprofilkurve

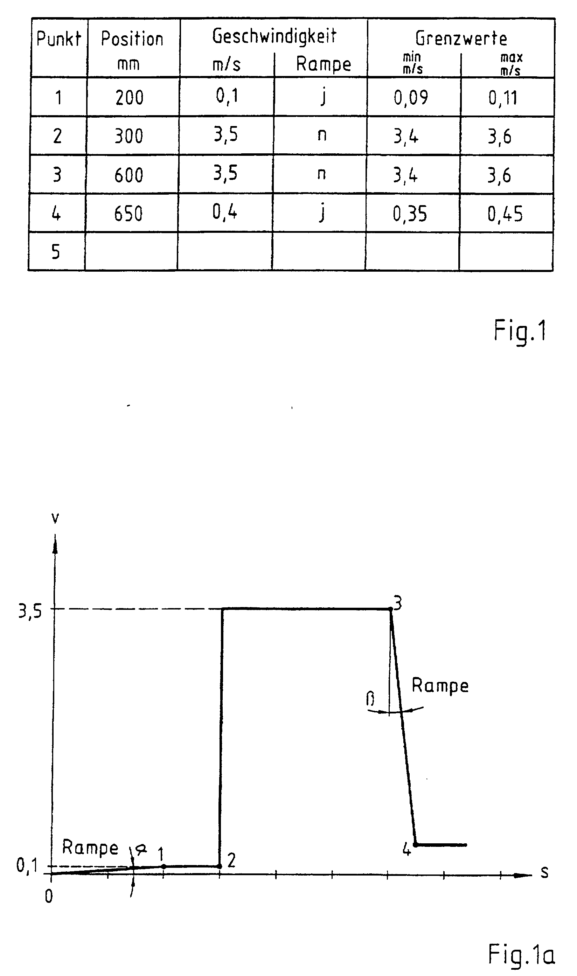

Die Einstelldaten der Druckgießmaschine werden in bekannter Weise über eine entsprechende Schnittstelle an einen Meßrechner übertragen. Zur Herstellung z. B. eines Geschwindigkeitsprofils als Sollkurve stehen dem Meßrechner z. B. die in der Fig. 1 dargestellten Daten zur Verfügung. In der Spalte 1 dieser Tabelle sind charakteristische Wegpunkte der Gießkolbenstellung als Punkte 1 bis 4 dargestellt, die der in Spalte 2 angegebenen Position des Gießkolbens entsprechen. Zu diesen Positionen wird eine in Spalte 3 angegebene Soll-Geschwindigkeit vorgegeben, wobei das Vorliegen einer Rampe mit den Buchstaben J (Ja) und keine Rampe mit dem Buchstaben N (Nein) näher beschrieben ist. In den beiden rechten Spalten werden Grenzwerte manuell eingegeben, wobei minimale und maximale Grenzwerte definiert werden. Bezüglich den Weg- und Geschwindigkeitsdaten erfolgt eine automatische Datenübernahme von der Druckgießmaschinen-Einstellung. Im Meßrechner werden die in Fig. 1 angegebenen Daten tabellarisch dargestellt, wobei die angegebenen Grenzwerte durch manuelle Eingabe hinzugefügt werden.

Fig. 1 a zeigt eine graphische Darstellung der tabellarischen Soll-Werte nach Fig. 1 insbesondere auch mit der Rampenausbildung durch die angegebenen Winkel α, β.

Im Meßrechner werden nun für jeden Gießzyklus oder -schuß die Kurven

$$f = s\,(t)$$

sowie

$$f = v\,(t)$$

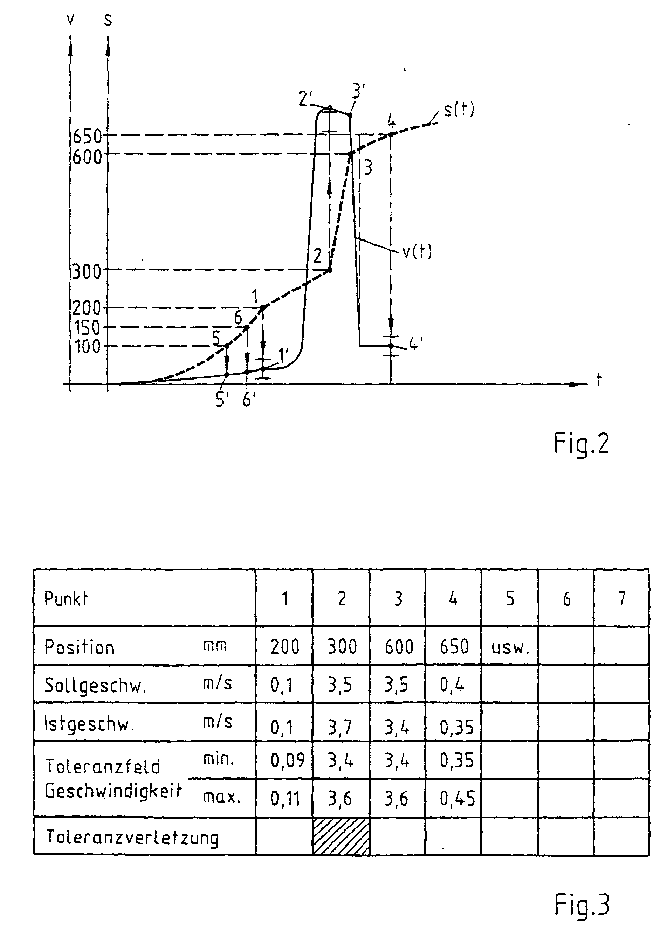

dargestellt, wie dies in der Fig. 2 wiedergegeben ist. Hier handelt es sich demnach um Ist-Profilkurven.

In diesem Diagramm nach Fig. 2 wird erfindungsgemäß im s (t)- und v (t)-Diagramm einem vorgegebenen Wegpunkt der Punkte 1 bis 4 aus Fig. 1 der jeweils zugehörige Ist-Geschwindigkeitspunkt 1' bis 4' zugeordnet. Dies ist in Fig. 2 durch eine Pfeildarstellung vom Punkt 1 zum Punkt 1' bis Punkt 4 zum Punkt 4' graphisch dargestellt. Die so gemessenen und in der Fig. 2 dargestellten Geschwindigkeitspunkte 1' bis 4' auf der Kurve v (t) werden im Meßrechner tabellarisch dargestellt und nach Eingabe von Toleranzgrenzen automatisch bewertet, wie dies die Fig. 3 zeigt.

In dem tabellarischen Vergleich nach Fig. 3 werden demnach aus dem zu Fig. 1 aufgestellten Weg-Geschwindigkeitsprofil die Soll-Geschwindigkeiten in den Punkten 1 bis 4 bzw. den zugehörigen Positionen nach Spalte 2 in Fig. 1 verglichen mit den aus Fig. 2 graphisch ermittelten Ist-Geschwindigkeiten in den Punkten 1' bis 4', die zu den zugehörigen Punkten 1 bis 4 in Fig. 2 ermittelt worden sind. Beispielsweise beträgt die Soll-Geschwindigkeit im Punkt 3 nach der Tabelle nach Fig. 1 3,5 m/s, während die aus der Fig. 2 ermittelten Ist-Geschwindigkeit in Punkt 3, 3,4 m/s beträgt. Das Toleranzfeld bzw. die Grenzwerte in Fig. 1 wurden festgelegt auf min. 3,4 und max. 3,6 m/s. Die mit 3,4 m/s gemessene Ist-Geschwindigkeit liegt deshalb innerhalb des festgelegten Toleranzfeldes.

Im Punkt 2, d. h., in der Position 300 mm des Gießkolbens wird beispielsweise eine Sollgeschwindigkeit von 3, 5 m/s gemäß Fig. 1 vorgegeben. Zu dieser Sollgeschwindigkeit wird gemäß den gemessenen s (t)- und v (t)-Ist-Kurven bei einer zugehörigen Kolbenposition von 300 mm eine Ist-Geschwindigkeit im Punkt 2' von 3,7 m/s ermittelt. Nachdem zu diesem Punkt 2 die Grenzwerte zwischen 3,4 und 3,6 m/s festgelegt wurden (s. Fig. 1) liegt der Wert der Ist-Geschwindigkeit in Punkt 2 von 3,7 m/s außerhalb der Toleranzgrenze. Dies ist in Fig. 3 durch eine Toleranzverletzung in Punkt 2 (schraffiertes Feld) angezeigt.

Die Fig. 3 enthält demzufolge nochmals die tabellarischen Werte der Fig. 1 als Sollwerte der Geschwindigkeit zu bestimmten Punkten bzw. Positionen des Gießkolbens. Gleichermaßen sind die Grenzwerte aus Fig. 1 nochmals in Fig. 3 aufgenommen. Diesen Sollwerten sind in Fig. 3 die aus der Fig. 2 ermittelten Ist-Geschwindigkeiten in den einzelnen Punkten hinzugefügt, die beispielsweise in den Punkten 1 bis 4 bei den Gießkolbenstellungen 200, 300, 600 und 650 mm graphisch und tabellarisch ermittelt werden. Diese Ermittlung der Ist-Geschwindigkeit auf der Kurve v (t) zu den zugehörigen Punkten 1 bis 4 ist in Fig. 2 durch Darstellung der Punkte 1' bis 4' wiedergegeben.

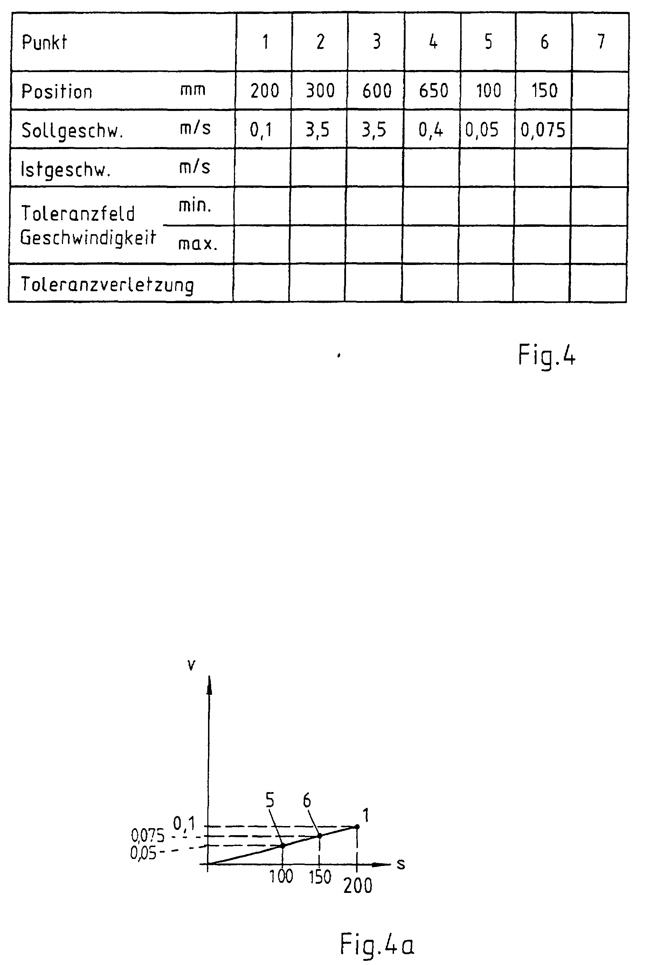

Gemäß der Darstellung der Erfindung nach Fig. 4, Fig. 4 a, können selbstverständlich neben den in den Figuren 1 und 3 dargestellten charakteristischen Wegpunkten 1 bis 4, die z. B. durch die Maschineneinstellung festgelegt worden sind, weitere beliebige Zwischenwerte nach dem gleichen Verfahren überwacht werden. Beispielsweise werden in der Tabelle nach Fig. 4 gemäß der Fig. 1 a in Verbindung mit Fig. 4 a zwei Zwischenpunkte 5 und 6 bei der Wegposition 100 bzw. 150 mm manuell festgelegt. Bei Eingabe dieser Wegpunkt-Zwischenwerte wird nun vom Meßrechner der jeweilige zugehörige Sollwert der Geschwindigkeit durch Interpolation errechnet, d. h., die Sollgeschwindigkeit im Punkt 5 mit 0,05 m/s und im Punkt 6 mit 0,075 m/s wird vom Rechner als Zwischenwerte interpoliert. Liegen diese Weg/Geschwindigkeitswerte fest, so kann wiederum ein Vergleich mit den gemessenen Profilkurven s (t) und v (t) nach Fig. 2 stattfinden, d. h., bei den vorgegebenen Positionen 100 und 150 mm werden auf der s (t)-Ist-Kurve die Punkte 5 und 6 an diesen Wegpositionen ermittelt und die zugehörigen Geschwindigkeitswerte auf der Ist-Geschwindigkeitskurve v (t) ermittelt. Diese Geschwindigkeitswerte sind mit 5', 6' in Fig. 2 dargestellt. Diese ermittelten Ist-Geschwindigkeiten können dann wiederum in der Tabelle nach Fig. 4 dargestellt werden, was Analog zum zuvor beschriebenen Verfahren nach Fig. 2 und 3 erfolgt.

Das zuvor für Geschwindigkeitsprofilkurven dargestellte Verfahren läßt sich sinngemäß ebenfalls für Druckprofilkurven durchführen. Dies wird nachfolgend näher erläutert.

Analog zur Tabelle nach Fig. 1 stehen dem Meßrechner der Druckgießmaschine die z. B. in Fig. 5 aufgeführten Einstelldaten als Solldaten zur Verfügung. Bei den in der linken Spalte dieser Tabelle aufgeführten Punkten handelt es sich wiederum um charakteristische Einstellpunkte bzw. Schaltpunkte, die durch die Maschineneinstellung festgelegt sind. Es erfolgt wiederum eine automatische Datenübernahme von der Druckgießmaschinen-Einstellung mit einer Festlegung des gewünschten Drucks in Abhängigkeit der Zeit sowie der Vorgabe einer Rampe. Die in den beiden rechten Spalten von Fig. 5 angegebenen Grenzwerte werden ebenfalls manuell eingegeben. Eine zugehörige graphische Darstellung der p (t)-Sollprofilkurve nach der Tabelle nach Fig. 5 ist in Fig. 6 wiedergegeben.

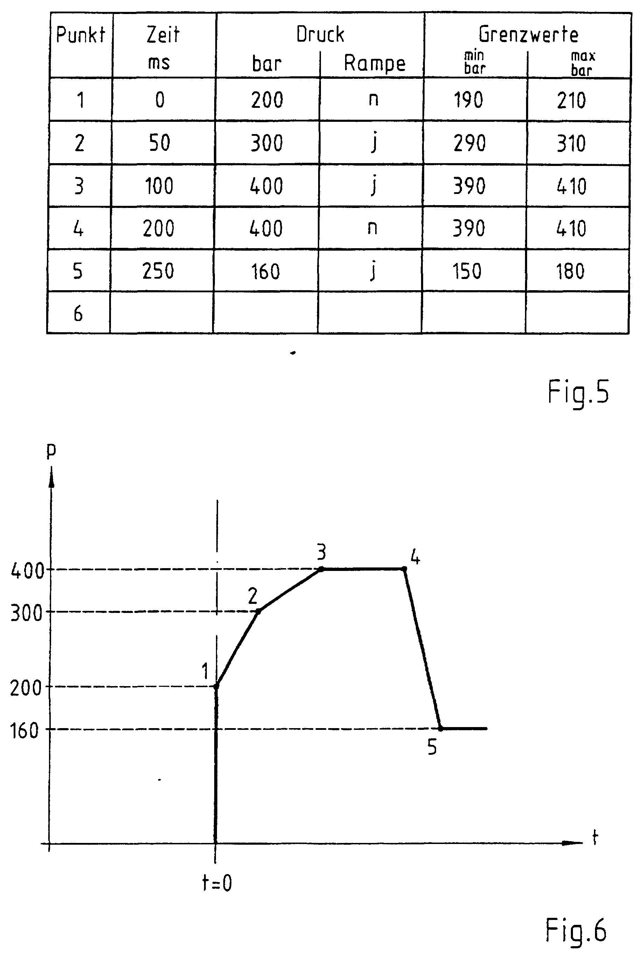

Charakteristisch an der Tabelle nach Fig. 5 ist die Wahl des "Zeitpunkts Null", zum Punkt 1, die entsprechend dem Nahezu-Stillstand des Gießkolbens zwischen der Formfüllphase und der Nachdruckphase gewählt wird (s. Fig. 6). Dieser Zeitpunkt Null wird für die Aktivierung des Druckprofils gewählt. Im Meßrechner werden diese Daten tabellarisch dargestellt und können durch manuelle Eingaben mit den Minimum- bzw. Maximumgrenzwerten versehen werden.

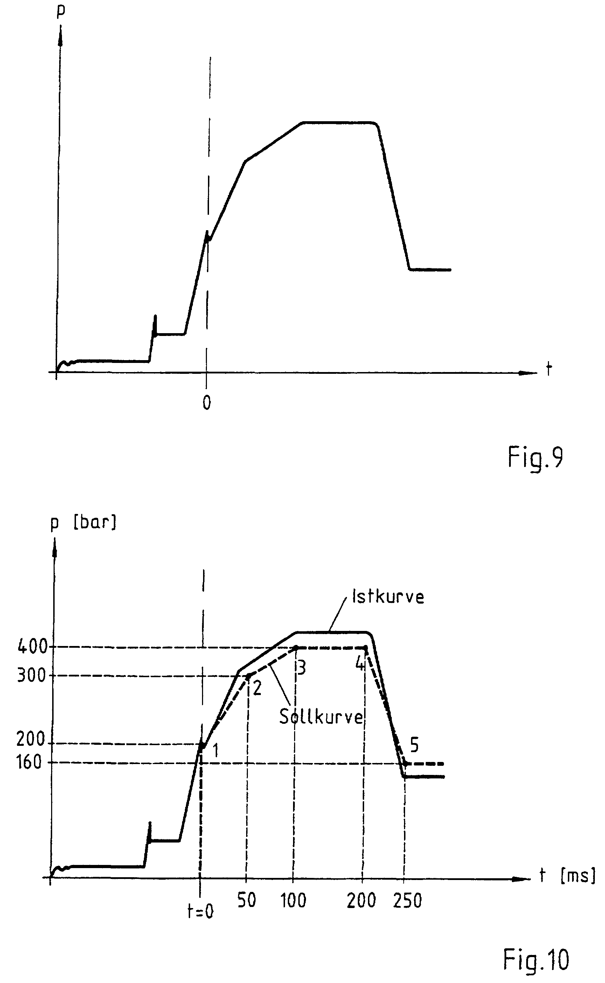

Im Meßrechner wird nunmehr für jeden Gießzyklus bzw. -schuß die Funktion f = p (t) als Ist-Profildruckkurve gemessen und aufgezeichnet. Dieser gibt z. B. eine in der Fig. 9 dargestellte Druck/Zeitkurve. Um die nach Fig. 9 gemessene Ist-Kurve mit der im Meßrechner gespeicherten Sollkurve nach Fig. 6 entsprechend den Werten nach Fig. 5 vergleichen zu können, muß gemäß obiger Ausführung auf der gemessenen Kurve nach Fig. 9 der "Zeitpunkt Null" für die Aktivierung des Druckprofils festgelegt werden. Dies geschieht beispielsweise durch das nachfolgend beschriebene Verfahren:

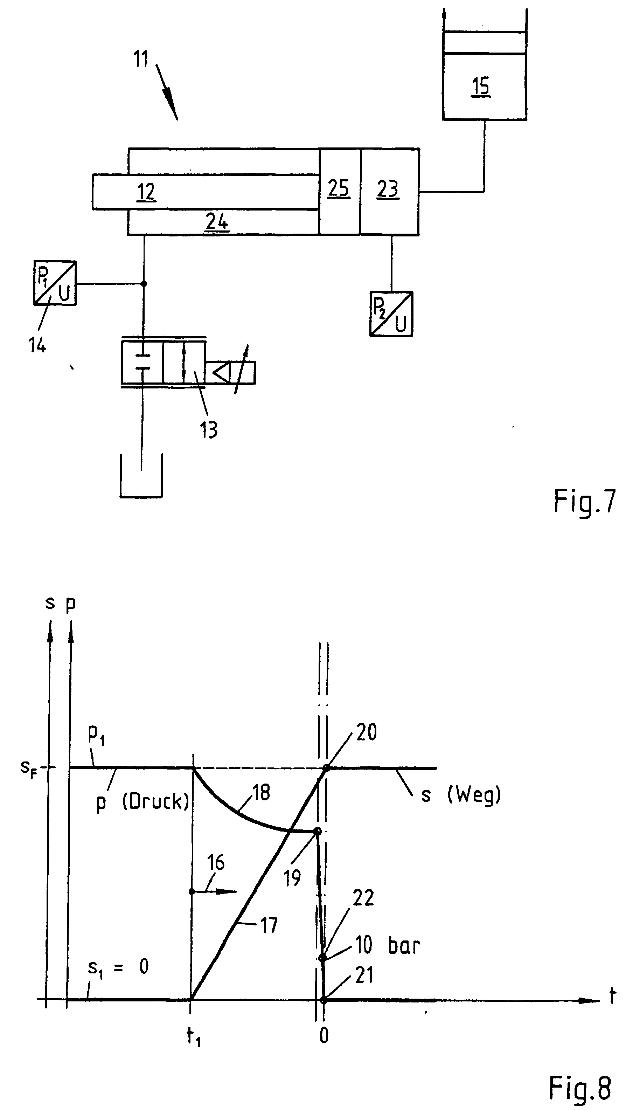

Bei dem in Fig. 7 dargestellten Gießaggregat 11 erfolgt die Regelung der Geschwindigkeit des Gießkolbens 12 mittels eines Servoventils 13. Während die Bewegung des Gießkolbens 12 steht an einem, auf der der Druckseite 23 gegenüberliegenden Seite 24 des Hydraulik-Antriebkolbens 25 angeordneten Druckaufnehmer 14 ein hydraulischer Druck an, der abhängig ist vom Antriebsdruck des Hydro-Speichers 15 und von der Geschwindigkeit des Gießkolbens 12. Gegen Ende der Formfüllphase ist die Form mit Metall gefüllt und der Gießkolben 12 kommt nahezu zum Stillstand. In diesem Augenblick wird der Druck am Aufnehmer 14 schlagartig bis annähernd null bar abgesenkt. Diese Absenkung des Drucks am Druckaufnehmer 14 wird zusammen mit einer Wegvorgabe am Gießkolben 12 als Signal für den Meßrechner für den "Zeitpunkt Null" gewählt, der zur Aktivierung der Soll-Profilkurve auf der Ist-Profilkurve verwendet wird. Die Wegvorgabe ist als logische Bedingung erfoderlich, um sicherzustellen, daß die Druckabsenkung am Druckaufnehmer 14 nur auf einer genau definierten Wegstrecke als Meßsignal verwendet wird. Vor dieser Wegstrecke erfolgte Druckabsenkungen erfüllen somit nicht die logische Bedingung und bleiben für die Aktivierung des "Zeitpunktes Null" unberücksichtigt. In Fig. 8 ist dieser Druckverlauf am Druckaufnehmer 14 in Abhängigkeit der Zeit sowie der Gießkolbenweg über die Zeit wiedergegeben.

Für den Gießkolbenweg besteht folgende Beziehung:

$s_k$ = Gießkolbenhub bei geschlossener Form (z. B.

$S_k$ = 900 mm)

$s_F$ = Startpunkt für die Aktivierung der logischen Bedingungen zur Festlegung des Zeitpunkts Null;

Legt man ein konstantes Weginkrement, bestehend aus der maximalen Gießrestdicke und einem Sicherheitszuschlag von z. B. 120 mm zugrunde, so ergibt sich

$$s_F = s_k - 120 \text{ mm} = 900 - 120 = 780 \text{ mm}.$$

Ab dem Punkt $S_F$ = 780 mm wird demnach die logische Bedingung aktiviert. Die logische Bedingung für den Zeitpunkt Null ist erfüllt bei $s_F$ (Ist), wenn eine Druckschwelle von p z. B. 10 bar erfüllt ist.

Der Ist-Wert des Gießkolbenwegs $S_F$(Ist) und der Ist-Wert des Druckaufnehmers $p_{(Ist)}$ werden an den Meßrechner übertragen. Ist die logische Bedingung für die Aktivierung des "Zeitpunkts Null" erfüllt, wird dieser Zeitwert vom Meßrechner erfaßt und abgespeichert. Nach Aufnahme der Kurven im Datenspeicher des Meßrechners werden die Kurven am Bildschirm dargestellt, und zwar zusammen mit der Kennzeichnung der Aktivierung für den "Zeitpunkt Null" in Form der in Fig. 9 dargestellten Kurve.

In Fig. 8 ist demnach zunächst der konstante Druck pl im Druckaufnehmer 14 nach Fig. 7 dargestellt, so lange der Gießkolben 2 noch steht (s1 = 0). Zum Zeitpunkt t1 startet der Gießkolben seine Vorwärtsbewegung (Pfeil 16) und es findet entlang der Wegkurve 17 eine lineare Wegbewegung über die Zeit statt. Während dieser Phase tritt eine allmähliche Druckreduzierung entlang der Druckkurve 18 ein, bis zum Ende der Formfüllphase im Punkt 19. Zu diesem Zeitpunkt kommt der Gießkolben 12 nahezu zum Stillstand (Punkt 20) und es findet der zuvor beschriebene schlagartige Druckabfall vom Punkt 19 zum Punkt 21 in Fig. 8 statt. Hierbei wird im Punkt 22 eine Druckschwelle von z. B. 10 bar als Schaltschwelle zur Festlegung des "Nullpunkts" gewählt, die erst ab dem Weginkrement $S_F$ auftritt und der jeweilige exakte Ort ist als $S_F$(Ist) definiert.

In der in Fig. 9 gemessenen Ist-Druckprofilkurve werden in einem zweiten Schritt vom Meßrechner die Sollpunkte der Druckprofilkurve dem Zeitpunkt Null zugeordnet und auf dem Bildschirm dargestellt. Hieraus ergibt sich die Darstellung nach Fig. 10, d. h., ausgehend vom "Zeitpunkt Null", dessen Ermittlung zuvor beschrieben ist, werden die aus der Tabelle in Fig. 5 vorgegebenen Sollwerte der Punkte 1 bis 5 in das Diagramm der gemessenen Ist-Kurve nach Fig. 9 eingefügt, so daß sich die Darstellung nach Fig. 10 ergibt. Damit ist ein exakter Vergleich der Solldruck-Profilkurve mit der Ist-Druck-Profilkurve möglich. Dies ergibt sich unmittelbar aus der Darstellung nach Fig. 10.

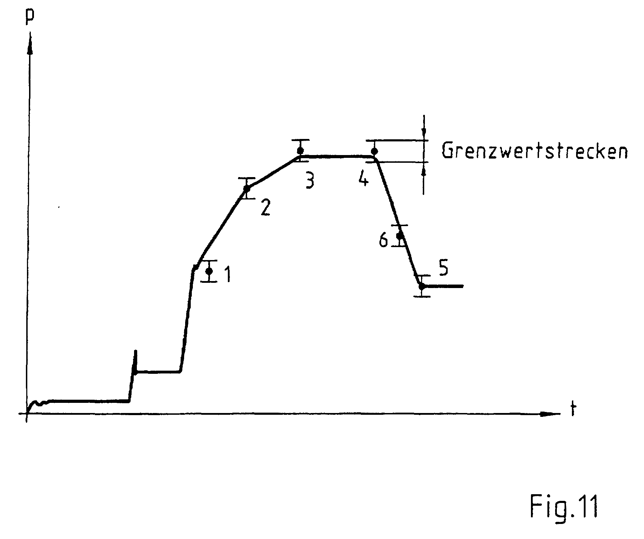

In Weiterbildung der Erfindung können die in der Tabelle nach Fig. 5 eingetragenen minimalen und maximalen Grenzwerte auf der Sollkurve nach Fig. 10 aufgetragen werden. Erfolgt ein Schneiden der Ist-Kurve mit den eingegebenen Grenzwertstrecken, so sind die Toleranzen nicht überschritten. Dies ist in Fig. 11 sinngemäß dargestellt. Im Ausführungsbeispiel nach Fig. 11 liegt der Punkt 1 beispielsweise außerhalb der Toleranz. Alle weiteren Punkte liegen innerhalb des Toleranzbandes.

Es ist weiterhin möglich, manuell beliebige weitere Überwachungspunkte in die Tabelle nach Fig. 5 einzutragen. Auch diese Überwachungspunkte werden auf dem Bildschirm des Meßrechners angezeigt. In der Fig. 11 ist dies beispielsweise der Punkt 6. Diese manuell eingetragenen Punkte ermöglichen z. B. die Überwachung des Druckes während einer Flanke. Damit stehen dem Meßrechner alle Daten zur Verfügung, um die an einem geregelten Gießaggregat eingegebenen Geschwindigkeits- und Druckprofilkurven auf einfache Weise und ohne manuelle Programmierung des Meßrechners zu vergleichen, auf Toleranz-Verletzungen zu untersuchen und alle bekannten statistischen Methoden anzuwenden.

Gemäß der Erfindung können anstelle von eingegebenen Soll-Profilkurven auch sogenannte "Masterkurven verwendet werden, die sich als Profilkurven von gemessenen Teilen guter Qualität ergeben. Diese "Masterkurven" können im Rechner abgespeichert werden und analog zu dem zuvor beschriebenen Verfahren mit gemessenen Ist-Werten verglichen und bewertet werden.

Es ist darüberhinaus möglich, die Masterkurven f = v (t) oder f = p (t) mittels eines Cursor abzufahren und an jeder beliebigen Stelle den relevanten Wegpunkt oder Druckpunkt als Sollpunkt vorzugeben. Aus diesem so vorgegebenen Sollpunkten wird wiederum, wie zuvor beschrieben, der Vergleich zwischen Ist- und Sollpunkten bzw. Ist- und Sollkurven durchgeführt.

Die Erfindung ist nicht auf das dargestellte und beschriebene Ausführungsbeispiel beschränkt. Sie umfaßt auch vielmehr alle fachmännischen Weiterbildungen und Abwandlungen im Rahmen der Schutzrechtsansprüche.

**Patentansprüche**

1. Verfahren zur Prozeßüberwachung und/oder Regelung des Gießaggregats einer Druckgießmaschine,

   - wobei in einen Rechner der Druckgießmaschine manuell eingegebene, gewünschte Einstellwerte und/oder sonstige fest vorgegebene Eingabewerte sogenannte Soll-Profilkurven und/ oder Sollpunkte mit definierten Positionen bilden,

   - wobei während eines Gießzyklus Prozeßparameter durch Meßwertaufnehmer gemessen und dem Meßrechner zugeführt werden und sogenannte Ist-Profilkurven bilden,

   - wobei eine Prozeßüberwachung bzw. -regelung durch einen Vergleich der Ist-Profilkurven mit den Soll-Profilkurven und/oder entsprechender Punkte durchgeführt wird,

dadurch gekennzeichnet,
daß für einen Vergleich von Ist- und Soll-Geschwindigkeitsprofilkurven des Gießkolbens im Rechner für einen Arbeitszyklus eine erste Ist-Profilkurve für den Gießkolbenweg in Abhängigkeit von der Zeit ($f = s_{ist}(t)$)

   - und eine zweite Ist-Profilkurve für die Gießkolbengeschwindigkeit in Abhängigkeit von der Zeit ($f = v_{ist}(t)$) ermittelt wird,

   - daß zu beliebigen, jedoch übereinstimmenden Wegpositionen des Gießkolbens aus gemessen Ist-Weg-Werten des Gießkolbens ($f = s_{ist}(t)$) die zugehörigen Ist-Geschwindigkeits-Werte des Gießkolbens ($f = v_{ist}(t)$) durch den Rechner ermittelt und diese so ermittelten Geschwindigkeit-Ist-Werte ($v_{ist}$) mit in den Rechner eingegebenen Geschwindigkeits-Soll-Werten ($v_{soll}$) des Gießkolbens in den Vergleichspositionen verglichen werden.

2. Verfahren zur Prozeßüberwachung und/oder Regelung des Gießaggregats einer Druckgießmaschine,

   - wobei in einen Rechner der Druckgießmaschine manuell eingegebene, gewünschte Einstellwerte und/oder sonstige fest vorgegebene Eingabewerte sogenannte Soll-Profilkurven und/ oder Sollpunkte mit definierten Positionen bilden,

   - wobei während eines Gießzyklus Prozeßparameter durch Meßwertaufnehmer gemessen und dem Meßrechner zugeführt werden und sogenannte Ist-Profilkurven bilden,

   - wobei eine Prozeßüberwachung bzw. -regelung durch einen Vergleich der Ist-Profilkurven mit den Soll-Profilkurven und/oder entsprechender Punkte durchgeführt wird,

dadurch gekennzeichnet,
daß für einen Vergleich von Ist- und Soll-Druckprofilkurven des Gießkolbens im Rechner für einen Arbeitszyklus eine erste Ist-Profilkurve für den Gießkolbenweg in Abhängigkeit von der Zeit ($f = s_{ist}(t)$)

   - und eine zweite Ist-Profilkurve für den Gießkolben-Druck in Abhängigkeit von der Zeit ($f = p_{ist}$

(t)) ermittelt wird,

- daß zu beliebigen, jedoch übereinstimmenden Wegpositionen des Gießkolbens aus gemessenen Ist-Weg-Werten des Gießkolbens ($f = s_{ist}$(t)) die zugehörigen Druck-Werte des Gießkolbens ($f = p_{ist}$(t)) durch den Rechner ermittelt und diese so ermittelten Druck-Ist-Werte ($p_{ist}$), mit in den Rechner eingegebenen Druck-Soll-Werten ($p_{soll}$) des Gießkolbens in den Vergleichspositionen verglichen werden.

3. Verfahren nach Anspruch 1, dadurch gekennzeichnet, daß eine tabellarische Eingabe von Sollwerten für die Gießkolbengeschwindigkeit in Abhängigkeit vom Gießkolben-Weg, gegebenenfalls unter Einbeziehung von Toleranzgrenzen erfolgt und daß die vom Rechner zu bestimmten Wegpositionen ermittelten Ist-Geschwindigkeits-Werte des Gießkolbens mit den so im Rechner gespeicherten Soll-Geschwindigkeitswerten in der gleichen Wegposition unter Berücksichtigung von Toleranzgrenzen verglichen werden und daß außerhalb der Toleranzgrenze ermittelte Ist-Geschwindigkeitswete des Gießkolbens als Fehler ausgewertet werden.

4. Verfahren nach Anspruch 1, dadurch gekennzeichnet, daß neben einem Vergleich von Ist/Soll-Geschwindigkeits-Profilkurven zu bestimmten Gießkolbenpositionen bzw. Gießzeiten ein Vergleich von Ist/Soll-Druckprofilkurven erfolgt.

5. Verfahren nach Anspruch 4, dadurch gekennzeichnet, daß der Startzeitpunkt zur Aufnahme der Ist-Druckprofilkurve variabel ist, wobei für einen Vergleich von Ist- und Soll-Druckprofilkurven eine "Nullpunktfestlegung" erfolgt.

6. Verfahren nach Anspruch 4 oder 5, dadurch gekennzeichnet, daß eine tabellarische Eingabe von Soll-Druckdaten des Gießkolbendrucks in Abhängigkeit der Gießzeit erfolgt, zur Bildung einer Soll-Profildruckkurve im Meßrechner, wobei zur zeitlichen Abstimmung von Ist- und Sollwerten als "Zeitpunkt Null" der Fast-Stillstand des Gießkolbens nach der Formfüllphase auf einer definierten Wegstrecke ($S_K$ - $S_F$) des Gießkolbens dient und wobei vorzugsweise Minimum/Maximum-Grenzwerte als Toleranzgrenzen festlegbar sind.

7. Verfahren nach Anspruch 5 oder 6, dadurch gekennzeichnet, daß die Gießgarnitur (11) der Druckgießmaschine einen Druckaufnehmer (14) auf der der Druckseite (23) gegenüberliegenden Seite (24) eines Hydraulikkolbens (25) aufweist, mittels welchem der durch die Kolbenbewegung des Hydraulikkolbens (15) erzeugte dynamische Druck zeitabhängig aufgenommen und dem Rechner zugeführt wird, wobei zur relativen "Nullpunktjustierung" der Zeitskalen der Ist-Druckprofilkurve und der Soll-Druckprofilkurve derjenige Zeitpunkt der Ist-Druckprofilkurve verwendet wird, bei dem der durch die Kolbenbewegung des Hydraulikkolbens (25) erzeugte dynamische Druck schlagartig auf nahezu Null abfällt.

8. Verfahren nach einem der vorhergehenden Ansprüche, dadurch gekennzeichnet, daß die Ist- und/oder Soll-Weg- bzw. Geschwindigkeitsprofilkurven und/oder die Ist- und Soll-Druckprofilkurven auf einem Bildschirm angezeigt werden.

9. Verfahren nach einem der vorhergehenden Ansprüchen, dadurch gekennzeichnet, daß die Eingabe der Sollwerte über einen Maschinenrechner der Druckgießmaschine erfolgt, der diese Daten einem Meßrechner zuführt, wobei der Maschinenrechner die Maschinensteuerung übernimmt.

10. Verfahren nach einem der vorhergehenden Ansprüche, dadurch gekennzeichnet, daß die im Meßrechner erfaßten Soll- und Ist-Profilkurven tabellarisch und/oder graphisch erfaßbar und ausgebbar sind.

11. Verfahren nach einem der vorhergehenden Ansprüche, dadurch gekennzeichnet, daß gewünschte Soll-Geschwindigkeits- und/oder Soll-Druck-Profilkurven in bestimmten Kurvenverläufen eine Rampe aufweisen.

12. Verfahren nach einem der vorhergehenden Ansprüchen, dadurch gekennzeichnet, daß zwischen durch die Maschineneinstellung festgelegten Schaltpunkten bzw. Vergleichspunkten der Gießkolben-Stellung bzw. der Gießzeit für einen Ist-Sollvergleich beliebige Zwischenstellungen einstellbar sind, wobei die zugehörigen Profilkurvenpunkte durch Rechner-Interpolation ermittelt werden.

13. Verfahren nach einem der vorhergehenden Ansprüchen, dadurch gekennzeichnet, daß anstelle der in den Rechner der Druckgießmaschine eingegebenen gewünschten Einstellwerte zur Bildung von Sollprofilkurven weiterhin oder alternativ ermittelte Druckgießkurven für Produkte guter Qualität als "Masterkurven" verwendet werden und die so erhaltene "MasterSollprofilkurve" mit gemessenen Ist-Profilkurven verglichen wird.

14. Verfahren nach Anspruch 13, dadurch gekennzeichnet, daß eine Master-Geschwindigkeits-Profilkurve und/oder eine Master-Druckprofilkurve ermittelt und als Sollprofilkurve verwendet wird.

15. Verfahren nach einem der vorhergehenden Ansprüchen, dadurch gekennzeichnet, daß im Meßrechner ein Cursor auf einer Weg- und/oder Geschwindigkeits- und/oder Druckprofilkurve bewegt wird und daß der Meßrechner zu jeder Cursor-Position die Stellung des Gießkolbens ermittelt, und daß die so ermittelte Ist-Profilwerte mit zugehörigen Soll-Profilwerten bei der gleichen Gießkolbenstellung verglichen werden.

16. Meßsystem zum automatischen Vergleich der Einstellparameter eines Gießaggregats mit gemessenen Gießparametern, dadurch gekennzeichnet, daß alle Einstelldaten (Soll-Werte des Gießaggregats) derart generierbar sind, daß nach Aufzeichnung von Ist-Kurven ein sofortiger automatischer Vergleich mit den Einstelldaten bzw. Einstellkurven erfolgt, wobei in einer tabellarischen Eingabe von Einstelldaten einer Druckgießmaschine eine Soll-Geschwindigkeitsprofilkurve darstellbar ist, in der eine Zuordnung von Soll-Geschwindigkeitspunkten zur Gießkolbenstellung erfolgt, wobei eine Aufzeichnung einer Ist-Geschwindigkeitsprofilkurve als v/t-Kurve erfolgt und die Ermittlung der Ist-Geschwindigkeit für bestimmte Punkte bzw. Kolbenstellungen dadurch erzielbar ist, daß auf die einzelnen relevanten eingegebenen Punkte auf der vom Meßrechner erstellten s/t-Kurve senkrechte Strahlen erzeugbar sind, und am Schnittpunkt mit der v/t-Kurve die Ist-Geschwindigkeitswerte automatisch ermittelbar sind.

17. Meßsystem zum automatischen Vergleich der Einstellparameter eines Gießaggregats mit gemessenen Gießparametern, dadurch gekennzeichnet, daß alle Einstelldaten (Soll-Werte des Gießaggregats) derart generierbar sind, daß nach Aufzeichnung von Ist-Kurven ein sofortiger automatischer Vergleich mit den Einstelldaten bzw. Einstellkurven erfolgt, wobei in einer tabellarischen Eingabe von Einstelldaten einer Druckgießmaschine eine Soll-Druckprofilkurve darstellbar ist, in der eine Zuordnung von Soll-Druckpunkten zur Gießkolbenstellung erfolgt, wobei eine Aufzeichnung einer Ist-Druck-Profilkurve als p/t-Kurve erfolgt und die Ermittlung des Ist-Druckes für bestimmte Punkte bzw. Kolbenstellungen dadurch erzielbar ist, daß auf die einzelnen relevanten eingegebenen Punkte auf der vom Meßrechner erstellten s/t-Kurve senkrechte Strahlen erzeugbar sind, und am Schnittpunkt mit der p/t-Kurve die Ist-Druckwerte automatisch ermittelbar sind.

18. Verfahren zur Prozessüberwachung und/oder Regelung des Gießaggregats, wobei zur Erzielung eines automatischen Vergleichs der Einstellparameter des Gießaggregats mit gemessenen Gießparametern die Einstelldaten der Druckgießmaschine aus einer tabellarischen Eingabe bestehen, aus der eine Druckprofilkurve (p/t-Kurve) zu seiner Darstellung abgeleitet wird, wobei den einzelnen Druckpunkten entsprechende Zeitwerte zugeordnet werden, dadurch gekennzeichnet, dass während der Bewegung des Gießkolbens (12) auf der der Druckseite (23) gegenüberliegenden Seite (24) eines Hydraulik-Antriebskolbens (25) für den Gießkolben einen Druck ($p_1$) mittels eines Druckaufnehmers (14) erfassbar ist, wobei der Gießkolben (12) gegen Ende der Formfüllphase nahezu zum Stillstand kommt (Gießkolbenstop) und wobei mittels des Druckaufnehmers (14) sowie eines Zeitaufnehmers die stark abfallende Druckflanke zusammen mit einer Zeitvorgabe am Gießkolben (12) als Signal erfassbar ist, welches im Messrechner als "Zeitpunkt Null" definiert wird, und dass der so ermittelte "Zeitpunkt Null" zur Aktivierung einer Druckprofilkurve des Gießkolbens verwendet wird zum Vergleich von Soll- und Ist-Profilkurven.

19. Verfahren nach Anspruch 18, dadurch gekennzeichnet, dass der Messpunkt "Gießkolbenstop" als Messsignal erfasst und vom Messsystem als senkrechter Strahl T0 generierbar ist, dass auf den Zeitabschnitt T0 + X, die bei Eingabe der Druckprofiltabelle festgelegt worden sind, im Messsystem weitere senkrechte Strahlen generierbar sind und dass die Schnittpunkte mit der Ist-Druckkurve mit den tabellarischen Einstelldaten der Maschineneinstellung vergleichbar und auswertbar sind.

20. Verfahren nach einem der vorhergehenden Ansprüche 18 oder 19, dadurch gekennzeichnet, dass bei der Eingabe von Maschineneinstelldaten gleichzeitig obere und untere Toleranzgrenzen eingebbar sind, wobei die Toleranzgrenzen in einem Messaufschrieb automatisch anzeigbar und Abweichungen zum Soll-Wert digital als Zahlenwert darstellbar sind.

**Claims**

1. Process for monitoring and/or controlling the casting unit of a diecasting machine,

   - wherein desired setting values and/or other rigidly predetermined input values manually input into a diecasting machine computer form so-called set-point profile curves and/or set-points with defined positions,
   - wherein, during a casting cycle, process parameters are measured by transducers and supplied to the measuring computer and form so-called actual value profile curves,
   - wherein process monitoring or control is carried out by comparison of the actual value profile curves and the set-point profile curves and/or corresponding points,

characterised in that,
a first actual value profile curve for the casting plunger travel is determined as a function of time (f = $s_{actual}$(t))

- and a second actual value profile curve for the casting plunger speed is determined as a function of time (f = $v_{actual}$ (t))

in the computer for one work cycle for a comparison of actual value and set-point speed profile curves,

- in that the associated actual speed values of the casting plunger (f = $v_{actual}$(t)) are determined by the computer at any, but coinciding, travel positions of the casting plunger from measured actual travel values of the casting plunger (f = $s_{actual}$(t)) and these actual speed values ($v_{actual}$) determined in this way are compared with set-point speed values ($v_{set-point}$) of the casting plunger input into the computer in the comparison positions.

2. Process for monitoring and/or controlling the casting unit of a diecasting machine,

- wherein desired setting values and/or other rigidly predetermined input values manually input into a diecasting machine computer form so-called set-point profile curves and/or set-points with defined positions,
- wherein, during a casting cycle, process parameters are measured by transducers and supplied to the measuring computer and form so-called actual value profile curves,
- wherein process monitoring or control is carried out by comparison of the actual value profile curves and the set-point profile curves and/or corresponding points,

characterised in that,
a first actual value profile curve for the casting plunger travel is determined as a function of time (f = $s_{actual}$(t))

- and a second actual value profile curve for the casting plunger pressure is determined as a function of time (f = $p_{actual}$(t))

in the computer for one work cycle for a comparison of actual value and set-point pressure profile curves,

- in that the associated pressure values of the casting plunger (f = $p_{actual}$(t)) are determined by the computer at any, but coinciding, travel positions of the casting plunger from measured actual travel values of the casting plunger (f = $s_{actual}$(t)) and these actual pressure values ($p_{actual}$) determined in this way are compared with set-point pressure values ($p_{set-point}$) of the casting plunger input into the computer in the comparison positions.

3. Process according to claim 1, characterised in that set-point values for the casting plunger speed are input in tabular form as a function of the casting plunger travel, optionally including tolerance limits, and in that the actual speed values of the casting plunger determined by the computer at specific travel positions are compared with the set-point speed values in the same travel position stored in the computer while taking into account tolerance limits, and in that actual speed values of the casting plunger determined outside of the tolerance limit are evaluated as errors.

4. Process according to claim 1, characterised in that a comparison of actual value/set-point pressure profile curves is made in addition to a comparison of actual value/set-point speed profile curves at specific casting plunger positions or casting times.

5. Process according to claim 4, characterised in that the start time for recording the actual value pressure profile curve is variable, wherein a "zero point" is fixed for a comparison of actual value and set-point pressure profile curves.

6. Process according to claim 4 or 5, characterised in that set-point pressure data of the casting plunger pressure is entered in tabular form as a function of the casting time in order to form a set-point profile pressure curve in the measuring computer, wherein the near standstill of the casting plunger after the mould filling phase at a defined distance ($S_K$ - $S_F$) of the casting plunger functions as "time zero" for synchronising of actual and set-point values and wherein minimum/maximum limit values can preferably be fixed as tolerance limits.

7. Process according to claim 5 or 6, characterised in that the casting fittings (11) of the diecasting machine have a pressure transducer (14) on the side (24) of a hydraulic plunger (25) remote from the pressure side (23), by means of which the dynamic pressure produced by the plunger movement of the hydraulic plunger (15) is picked up as a function of time and is supplied to the computer, wherein, for relative "zero adjustment" of the time scales of the actual value pressure profile curve and of the set-point pressure profile curve, the moment of the actual value pressure profile curve is used in which the dynamic pressure produced by the plunger movement of the hydraulic plunger (25) abruptly drops to almost zero.

8. Process according to one of the preceding claims, characterised in that the actual value and/or set-point travel or speed profile curves and/or the actual value and set-point pressure profile curves are displayed on a screen.

9. Process according to one of the preceding claims, characterised in that the set-point values are input via a diecasting machine computer which supplies this data to a measuring computer, wherein the machine computer assumes machine control.

10. Process according to one of the preceding claims, characterised in that the set-point and actual value profile curves recorded in the measuring computer can be recorded and output in tabular and/or graph form.

11. Process according to one of the preceding claims, characterised in that desired set-point speed and/or set-point pressure profile curves have an incline in certain curves.

12. Process according to one of the preceding claims, characterised in that any intermediate positions can be adjusted between switching points fixed by the machine setting or comparison points of the casting plunger position or the casting time for an actual value-set-point comparison, wherein the associated profile curve points are determined by computer interpolation.

13. Process according to one of the preceding claims, characterised in that instead of the desired setting values input into the diecasting machine computer for forming set-point profile curves, other die cast curves or die cast curves determined in another way are used as "master curves" for products of high quality and the "master set-point profile curve" obtained in this way is compared with measured actual value profile curves.

14. Process according to claim 13, characterised in that a master speed profile curve and/or a master pressure profile curve is determined and used as set-point profile curve.

15. Device according to one of the preceding claims, characterised in that a cursor is moved on a travel and/or speed and/or pressure profile curve in the measuring computer, and in that the measuring computer determines the position of the casting plunger for each cursor position, and in that the actual profile values determined in this way are compared with associated set-point profile values at the same casting plunger position.

16. Measuring system for automatically comparing the setting parameters of a casting unit with measured casting parameters, characterised in that all setting data (set-point values of the casting unit) can be generated in such a way that, after recording actual value curves, an immediate and automatic comparison is made with the setting data or setting curves, wherein a set-point speed profile curve can be represented in a tabular input of setting data of a diecasting machine, in which there is an association of set-point speed points with casting plunger position, wherein recording of an actual value speed profile curve is made as v/t curve and the actual value speed for specific points or plunger positions can be determined in that perpendicular beams can be produced on the individual relevant input points on the s/t curve produced by the measuring computer, and the actual speed values can be automatically determined at the point of intersection with the v/t curve.

17. Measuring system for automatically comparing the setting parameters of a casting unit with measured casting parameters, characterised in that all setting data (set-point values of the casting unit) can be generated in such a way that after recording actual value curves, an immediate and automatic comparison is made with the setting data or setting curves, wherein a set-point pressure profile curve can be represented in a tabular input of setting data of a diecasting machine, in which there is an association of set-point pressure points with casting plunger position, wherein recording of an actual value pressure profile curve is made as p/t curve and the actual value pressure for specific points or plunger positions can be determined in that perpendicular beams can be produced on the individual relevant input points on the s/t curve produced by the measuring computer, and the actual pressure values can be automatically determined at the point of intersection with the p/t curve.

18. Process for monitoring and/or controlling the casting unit, wherein the setting data of the diecasting machine consists of a tabular input in order to achieve an automatic comparison of the setting parameters of the casting unit and measured casting parameters, from which input a pressure profile curve (p/t curve) is derived for its illustration, wherein corresponding time values are associated with the individual pressure points, characterised in that a pressure ($p_1$) can be detected by means of a pressure transducer (14) for the casting plunger at the side (24) of a hydraulic drive plunger (25) remote from the pressure side (23) during movement of the casting plunger (12), wherein the casting plunger (12) is practically stationary towards the end of the mould filling phase (casting plunger stop) and wherein the markedly decreasing pressure flank together with a time preset can be recorded on the casting plunger (12) as a signal by means of the pressure transducer (14) and a time transducer, which signal is defined in the measuring computer as "time zero", and in that the "time zero" determined in this way is used to activate a pressure profile curve of the casting plunger for comparing set-point and actual value profile curves.

**19.** Process according to claim 18, characterised in that the measuring point "casting plunger stop" is detected as measuring signal and can be generated by the measuring system as perpendicular beam T0, in that further perpendicular beams can be generated in the measuring system on the time portions T0 + X which were fixed during input of the pressure profile table, and in that the points of intersection with the actual value pressure curve can be compared and evaluated with the tabular setting data of the machine setting.

**20.** Process according to one of the preceding claims 18 or 19, characterised in that during input of machine setting data upper and lower tolerance limits can be input at the same time, wherein the tolerance limits can be automatically displayed in a measuring record and deviations from the set-point can be represented digitally as a numerical value.

**Revendications**

**1.** Procédé pour surveiller le processus et/ou régler l'appareil de coulée d'une machine de coulée sous pression,

- des valeurs de réglage souhaitées, entrées manuellement dans un calculateur de la machine de coulée sous pression et/ou des valeurs d'entrée prédéfinies de façon fixe quelconques formant des courbes de profil de consigne et/ou des points de consigne ayant des positions définies,
- pendant un cycle de coulée, des paramètres de processus étant mesurés par des capteurs de valeurs de mesure et amenés au calculateur de mesure et formant des courbes de profil réelles,
- une surveillance ou un réglage du processus étant effectué par une comparaison des courbes de profil réelles avec les courbes de profil de consigne et/ou des points correspondants,

caractérisé en ce que :

- pour une comparaison de courbes de profil de pression de consigne et réelles du piston de coulée, dans le calculateur, pour un cycle de travail, une première courbe de profil réelle pour la course du piston de coulée est déterminée en fonction du temps ($f = s_{réel}(t)$), et une seconde courbe de profil réelle pour la vitesse du piston de coulée est déterminée de façon dépendant du temps ($f = v_{réel}(t)$),
- en des positions de course quelconques, mais concordantes, du piston de coulée, à partir de valeurs de course réelles mesurées du piston de coulée ($f = s_{réel}(t)$), les valeurs de vitesse réelles correspondantes du piston de coulée ($f = v_{réel}(t)$) sont déterminées par le calculateur et ces valeurs réelles de vitesse ainsi déterminées ($v_{réel}$) sont comparées à des valeurs de consigne de vitesse entrées dans le calculateur ($v_{consigne}$) du piston de coulée dans les positions de comparaison.

**2.** Procédé pour surveiller le processus et/ou régler l'appareil de coulée d'une machine de coulée sous pression,

- des valeurs de réglage souhaitées, entrées manuellement dans un calculateur de la machine de coulée sous pression et/ou des valeurs d'entrée prédéfinies de façon fixe quelconques formant des courbes de profil de consigne et/ou des points de consigne ayant des positions définies,
- pendant un cycle de coulée, des paramètres de processus étant mesurés par des capteurs de valeurs de mesure et amenés au calculateur de mesure et formant des courbes de profil réelles,
- une surveillance ou un réglage du processus étant effectué par une comparaison des courbes de profil réelles avec les courbes de profil de consigne et/ou des points correspondants,

caractérisé en ce que :

- pour une comparaison de courbes de profil de pression de consigne et réelles du piston de coulée, dans le calculateur, pour un cycle de travail, une première courbe de profil réelle pour la course du piston de coulée est déterminée en fonction du temps ($f = s_{réel}(t)$), et une seconde courbe de profil réelle pour la pression du piston de coulée est déterminée de façon dépendant du temps ($f = p_{réel}(t)$),
- en des positions de course quelconques, mais concordantes, du piston de coulée, à partir de valeurs de course réelles mesurées du piston de coulée ($f = s_{réel}(t)$), les valeurs de pression correspondantes du piston de coulée ($f = p_{réel}(t)$) sont déterminées par le calculateur et ces valeurs réelles de pression ainsi déterminées

($p_{réel}$) sont comparées à des valeurs de consigne de pression entrées dans le calculateur ($p_{consigne}$) du piston de coulée dans les positions de comparaison.

3. Procédé selon la revendication 1,
caractérisé en ce qu'une entrée, sous forme de table, de valeurs de consigne pour la vitesse du piston de coulée est effectuée de façon dépendant de la course du piston de coulée, le cas échéant en tenant compte de valeurs de tolérance, et en ce que les valeurs de vitesse réelles, déterminées par le calculateur en des positions de course déterminées, du piston de coulée sont comparées aux valeurs de vitesse de consigne mémorisées ainsi dans le calculateur dans la même position de course en tenant compte de limites de tolérance, et en ce que des valeurs de vitesse réelle, déterminées à l'extérieur de la limite de tolérance, du piston de coulée sont exploitées comme défauts.

4. Procédé selon la revendication 1,
caractérisé en ce que, à côté d'une comparaison de courbes de profil de vitesse réelles/de consigne en des temps de coulée ou des positions du piston de coulée déterminés, il est effectué une comparaison de courbes de profil de pression réelles/de consigne.

5. Procédé selon la revendication 4,
caractérisé en ce que le moment de départ pour enregistrer la courbe de profil de pression réelle est variable, une "détermination du point de référence" étant effectuée pour une comparaison de courbes de profil de pression réelles et de consigne.

6. Procédé selon la revendication 4 ou 5,
caractérisé en ce qu'une entrée, sous forme de table, de données de pression de consigne de la pression du piston de coulée est effectuée de façon dépendant du temps de coulée, pour former une courbe de profil de pression de consigne dans le calculateur de mesure, l'arrêt rapide du piston de coulée après la phase de remplissage du moule sur une étendue de course définie ($S_K$ - $S_F$) du piston de coulée servant pour accorder de façon temporelle des valeurs réelles et des valeurs de consigne comme "moment zéro", et, avantageusement, des valeurs limites minimale/maximale pouvant être déterminées comme limites de tolérance.

7. Procédé selon la revendication 5 ou 6,
caractérisé en ce que la garniture de coulée (11) de la machine de coulée sous pression présente un capteur de pression (14) sur le côté (24), opposé au côté de pression (23), d'un piston hydraulique (25), au moyen duquel la pression dynamique engendrée par le déplacement du piston hydraulique (25) est détectée en fonction du temps et est amenée au calculateur, et, pour le "réglage du point de référence" relatif des échelles temporelles de la courbe de profil de pression réelle et de la courbe de profil de pression de consigne, il est utilisé le moment de la courbe de profil de pression réelle pour lequel la pression dynamique engendrée par le déplacement du piston hydraulique (25) chute brusquement à pratiquement zéro.

8. Procédé selon une des revendications précédentes,
caractérisé en ce que les courbes de profil de vitesse ou les courbes de profil de course réelles et/ou de consigne et/ou les courbes de profil de pression réelles et de consigne sont affichées sur un écran.

9. Procédé selon une des revendications précédentes,
caractérisé en ce que l'entrée des valeurs de consigne est effectuée par l'intermédiaire d'un calculateur de la machine de coulée sous pression, qui amène ces données à un calculateur de mesure, le calculateur de la machine prenant en charge la commande de la machine.

10. Procédé selon une des revendications précédentes,
caractérisé en ce que les courbes de profil réelles et de consigne détectées dans le calculateur de mesure peuvent être détectées et sorties sous forme de table et/ou de façon graphique.

11. Procédé selon une des revendications précédentes,
caractérisé en ce que des courbes de profil de vitesse de consigne et/ou des courbes de profil de pression de consigne souhaitées présentent, dans des allures de courbe déterminées, une rampe.

12. Procédé selon une des revendications précédentes,
caractérisé en ce que des positions intermédiaires quelconques sont réglables entre des points de commutation ou des points de comparaison, déterminés par le réglage de la machine, de la position du piston de coulée ou du temps de coulée pour une comparaison valeurs réelles - valeurs de consigne, les points des courbes de profil correspondants étant déterminés par interpolation par calculateur.

13. Procédé selon une des revendications précédentes,
caractérisé en ce que, à la place des valeurs de réglage souhaitées, entrées dans le calculateur de la machine de coulée sous pression, pour former des courbes de profil de consigne, des courbes de coulée sous pression déterminées de plus ou de façon alternative pour des produits de bonne qualité sont utilisées comme "courbes originales", et la "courbe de profil de consigne originale" ainsi obtenue est comparée à des courbes de profil réelles mesurées.

14. Procédé selon la revendication 13,
caractérisé en ce qu'une courbe de profil de vitesse originale et/ou une courbe de profil de pression originale sont déterminées et utilisées comme courbes de profil de consigne.

15. Procédé selon une des revendications précédentes,
caractérisé en ce que, dans le calculateur de mesure, un curseur est déplacé sur une courbe de profil de course et/ou de vitesse et/ou de pression, et en ce que le calculateur de mesure en chaque position du curseur détermine la position du piston de coulée, et en ce que les valeurs de profil réelles ainsi déterminées sont comparées à des valeurs de profil de consigne correspondantes pour la même position du piston de coulée.

16. Système de mesure pour la comparaison automatique des paramètres de réglage d'un appareil de coulée avec des paramètres de coulée mesurés,
caractérisé en ce que toutes les données de réglage (valeurs de consigne de l'appareil de coulée) peuvent être engendrées de sorte que, après enregistrement de courbes réelles, il est effectué une comparaison immédiate automatique avec les courbes de réglage ou données de réglage, une courbe de profil de vitesse de consigne pouvant être représentée en une entrée, sous forme de table, de données de réglage d'une machine de coulée sous pression, où il est effectué une association de points de vitesse de consigne par rapport à la position du piston de coulée, un enregistrement d'une courbe de profil de vitesse réelle étant effectué comme courbe v/t et la détermination de la vitesse réelle pouvant être obtenue pour des points ou positions du piston déterminés en ce que, sur les points entrés pertinents individuels sur la courbe s/t établie par le calculateur de mesure, des rayons perpendiculaires peuvent être engendrés et, au point d'intersection avec la courbe v/t, les valeurs de vitesse réelles peuvent être déterminées automatiquement.

17. Système de mesure pour la comparaison automatique des paramètres de réglage d'un appareil de coulée avec des paramètres de coulée mesurés,
caractérisé en ce que toutes les données de réglage (valeurs de consigne de l'appareil de coulée) peuvent être engendrées de sorte que, après enregistrement de courbes réelles, il est effectué une comparaison immédiate automatique avec les courbes de réglage ou données de réglage, une courbe de profil de pression de consigne pouvant être représentée en une entrée, sous forme de table, de données de réglage d'une machine de coulée sous pression, où il est effectué une association de points de pression de consigne par rapport à la position du piston de coulée, un enregistrement d'une courbe de profil de pression réelle étant effectué comme courbe p/t et la détermination de la pression réelle pouvant être obtenue pour des points ou positions du piston déterminés en ce que, sur les points entrés pertinents individuels sur la courbe s/t établie par le calculateur de mesure, des rayons perpendiculaires peuvent être engendrés et, au point d'intersection avec la courbe p/t, les valeurs de pression réelles peuvent être déterminées automatiquement.

18. Procédé pour surveiller le processus et/ou régler l'appareil de coulée, où, pour obtenir une comparaison automatique des paramètres de réglage de l'appareil de coulée avec des paramètres de coulée mesurés, les données de réglage de la machine de coulée sous pression sont constituées d'une entrée sous forme de table, à partir de laquelle il est dérivé une courbe de profil de pression (courbe p/t) pour sa représentation, les points individuels de pression étant associés à des valeurs temporelles correspondantes,
caractérisé en ce que, pendant le déplacement du piston de coulée (12) sur le côté (24), opposé au côté de pression (23), d'un piston d'entraînement hydraulique (25) pour le piston de coulée, une pression ($p_1$) peut être détectée au moyen d'un capteur de pression (14), le piston de coulée (12), vers la fin de la phase de remplissage du moule, venant pratiquement à l'arrêt (arrêt du piston de coulée), et, au moyen du capteur de pression (14) ainsi que d'un capteur temporel, le flanc de pression chutant fortement, en même temps qu'une allocation temporelle, sur le piston de coulée (12) pouvant être détecté comme signal, lequel, dans le calculateur de mesure, est défini comme "moment zéro", et en ce que le "moment zéro" ainsi déterminé est utilisé pour l'activation d'une courbe de profil de pression du piston de coulée pour comparer des courbes de profil de consigne et réelles.

19. Procédé selon la revendication 18,
caractérisé en ce que le point de mesure "arrêt du piston de coulée" est détecté comme signal de mesure et peut être engendré par le système de mesure comme rayon perpendiculaire (T0), en ce que, sur les segments temporels (T0 + X), qui ont été déterminés lors de l'entrée de la table de profils de pression, d'autres rayons perpendiculaires peuvent être engendrés dans le système de mesure, et en ce que les points d'intersection avec la courbe de pression réelle peuvent être comparés avec les données de réglage, sous forme de table, du réglage de la machine et être exploités.

20. Procédé selon une des revendications précédentes 18 ou 19,
caractérisé en ce que, lors de l'entrée de données de réglage de machine, simultanément, des limites supérieure et inférieure de tolérance peuvent être entrées, les limites de tolérance pouvant être affichées automatiquement sur un enregistrement de mesure et des écarts par rapport à la valeur de consigne pouvant être représentés, de façon numérique, comme valeur numérique.

| Punkt | Position mm | Geschwindigkeit | | Grenzwerte | |
|---|---|---|---|---|---|
| | | m/s | Rampe | min m/s | max m/s |
| 1 | 200 | 0,1 | j | 0,09 | 0,11 |
| 2 | 300 | 3,5 | n | 3,4 | 3,6 |
| 3 | 600 | 3,5 | n | 3,4 | 3,6 |
| 4 | 650 | 0,4 | j | 0,35 | 0,45 |
| 5 | | | | | |

Fig.1

Fig.1a

Fig.2

| Punkt | | 1 | 2 | 3 | 4 | 5 | 6 | 7 |
|---|---|---|---|---|---|---|---|---|
| Position | mm | 200 | 300 | 600 | 650 | usw. | | |
| Sollgeschw. | m/s | 0,1 | 3,5 | 3,5 | 0,4 | | | |
| Istgeschw. | m/s | 0,1 | 3,7 | 3,4 | 0,35 | | | |
| Toleranzfeld Geschwindigkeit | min. | 0,09 | 3,4 | 3,4 | 0,35 | | | |
| | max. | 0,11 | 3,6 | 3,6 | 0,45 | | | |
| Toleranzverletzung | | | ▨ | | | | | |

Fig.3

| Punkt | | 1 | 2 | 3 | 4 | 5 | 6 | 7 |
|---|---|---|---|---|---|---|---|---|
| Position | mm | 200 | 300 | 600 | 650 | 100 | 150 | |
| Sollgeschw. | m/s | 0,1 | 3,5 | 3,5 | 0,4 | 0,05 | 0,075 | |
| Istgeschw. | m/s | | | | | | | |
| Toleranzfeld Geschwindigkeit | min. | | | | | | | |
| | max. | | | | | | | |
| Toleranzverletzung | | | | | | | | |

Fig.4

Fig.4a

| Punkt | Zeit ms | Druck | | Grenzwerte | |
| --- | --- | --- | --- | --- | --- |
| | | bar | Rampe | min bar | max bar |
| 1 | 0 | 200 | n | 190 | 210 |
| 2 | 50 | 300 | j | 290 | 310 |
| 3 | 100 | 400 | j | 390 | 410 |
| 4 | 200 | 400 | n | 390 | 410 |
| 5 | 250 | 160 | j | 150 | 180 |
| 6 | | | | | |

Fig.5

Fig.6

Fig.7

Fig.8

Fig.9

Fig.10

Fig.11